# FASCICULE DE BREVET EUROPEEN

(11) **EP 2 269 431 B1**
(45) Date de publication et mention de la délivrance du brevet: **03.05.2017**
(21) Numéro de dépôt: 10290299.6
(22) Date de dépôt: 04.06.2010
(51) Int. Cl.: A01B 29/04

(54) **Rouleau à pneumatiques semi-creux, notamment pour machines agricoles**
Walze mit Halbhohlreifen, insbesondere für Landwirtschaftsmaschinen
Roller with semi-hollow tyres, in particular for farming machines

(30) Priorité: 08.06.2009 FR 0902759
(43) Date de publication de la demande: 05.01.2011
(73) Titulaire: OTICO, 77650 Chalmaison (FR)
(72) Inventeur: Phely, Olivier, 77520 Thenisy (FR)
(74) Mandataire: Plaçais, Jean Yves

(56) Documents cités:
- EP-A1- 1 763 979
- EP-A1- 1 810 560
- DE-A1- 19 538 585
- DE-U1- 9 205 660
- FR-A1- 2 776 239

## Description

L'invention concerne un rouleau muni de pneumatiques semi-creux et destiné aux machines agricoles et analogues.

Les rouleaux de machines agricoles sont classiquement combinés à divers outils ou machines, comme des outils de travail du sol, des semoirs, etc. Le plus souvent une telle machine comprend une combinaison d'outils portée à l'arrière d'un tracteur et suivie par un rouleau. Le rouleau sert notamment à ré-appuyer la terre qui a été préalablement travaillée par les outils et à régler la profondeur de travail des outils.

Il existe de nombreux types de rouleaux qui vont du rouleau traditionnel constitué d'un cylindre métallique jusqu'aux rouleaux plus récents qui comprennent des éléments annulaires souples, tels que des pneumatiques ou analogues, enfilés sur un tube monté rotatif autour d'un axe.

Il peut s'agir, par exemple, de pneumatiques de type semi-creux comme enseigné par la publication FR-A-2763279 au nom de la demanderesse.

Ces pneumatiques de type semi-creux sont enfilés directement autour d'un support tubulaire et ne sont pas gonflés, ce qui leur confère une certaine souplesse. Ils ont généralement un profil en dôme ce qui permet de créer des sillons dans le sol, par exemple pour y semer des graines au moyen d'un semoir disposé à l'arrière du rouleau.

Ces rouleaux donnent satisfaction mais ils ont pour inconvénient d'être relativement lourds, ce qui nécessite des tracteurs de grande puissance en particulier lorsque le rouleau fait partie d'une machine portée qui doit être relevée à l'arrière du tracteur lorsque ce dernier tracteur opère des manoeuvres de retournement ou circule sur route.

Le poids élevé des rouleaux connus est dû en grande partie au support tubulaire qui est formé d'un cylindre creux en acier de diamètre élevé qui reçoit directement les pneumatiques.

A titre d'exemple, le poids d'un rouleau connu équipé de pneumatiques de type semi-creux est au minimum de 350 kg pour une largeur de 3 m et un diamètre des pneumatiques de 500 à 600 mm.

FR 2 776 239 divulgue un rouleau selon le préambule de la revendication 1.

L'invention a notamment pour but de surmonter les inconvénients précités.

Elle propose à cet effet un rouleau comprenant un support tubulaire propre à tourner autour d'un axe et une pluralité de pneumatiques de type semi-creux montés autour du support tubulaire.

Selon l'invention, le rouleau comprend des paires d'entretoises conçues pour maintenir les pneumatiques à l'écart du support tubulaire, chaque entretoise ayant un moyeu propre à être enfilé autour du support tubulaire et un bord périphérique, les bords périphériques des entretoises d'une même paire étant aménagés pour maintenir une partie annulaire de retenue du pneumatique, un anneau élastique étant à chaque fois disposé autour du support tubulaire entre les moyeux de deux entretoises appartenant à deux paires adjacentes.

Il en résulte que chacun des pneumatiques de type semi-creux est maintenu espacé du support tubulaire par une paire d'entretoises enfilées autour du support tubulaire et jouant ainsi le rôle d'organe de support et d'espacement pour le pneumatique.

Il est possible ainsi d'utiliser un support tubulaire, généralement un cylindre en acier, de diamètre réduit par rapport aux rouleaux de la technique antérieure où les pneumatiques étaient enfilés directement autour du support tubulaire.

La présence d'anneaux élastiques disposés en alternance avec les paires d'entretoises permet d'assurer une souplesse axiale à l'ensemble et d'éviter au jeu nécessairement présent entre le support tubulaire et l'entretoise de détériorer l'ensemble.

En outre, ces anneaux élastiques jouent le rôle d'espaceurs, dans la direction axiale, ce qui permet de modifier l'espacement axial entre les pneumatiques semi-creux et donc de modifier à volonté le pas qui les sépare, en remplaçant les anneaux élastiques par d'autres anneaux de dimension axiale différente.

Le gain de poids ainsi réalisé sur un rouleau selon l'invention peut être de l'ordre de 25 à 30 % par rapport à un rouleau de la technique antérieure.

Par ailleurs, selon un mode de réalisation non couvert par l'invention, les entretoises sont réalisées de moulage à partir d'une matière plastique, ce qui contribue à diminuer le poids du rouleau. Dans la description qui suit, faite seulement à titre d'exemple, on se réfère aux dessins annexés, sur lesquels
- la figure 1 est une vue partielle en coupe axiale d'un rouleau selon une première forme de réalisation de l'invention, la coupe étant prise suivant la ligne I-I de la figure 2 ;
- la figure 2 est une vue d'extrémité du rouleau de la figure 1 ;
- la figure 3 est une vue partielle en coupe axiale et en perspective du rouleau de la figure 1 ;
- la figure 4 est une vue partielle en perspective du support tubulaire du rouleau des figures 1 et 3 ;
- la figure 5 est une vue en coupe transversale d'un pneumatique ;
- la figure 6 est une vue partielle en perspective d'une entretoise ;
- la figure 7 est une vue analogue à la figure 6 montrant une entretoise destinée à un rouleau d'extrémité et munie de renforts dans la région du moyeu ;
- les figures 8 à 10 sont des vues en perspective d'anneaux élastiques ayant des dimensions axiales de valeurs croissantes ;
- la figure 11 est une vue partielle en coupe axiale d'un rouleau montrant les forces qui s'exercent sur un anneau élastique comprimé entre deux entretoises ; et
- la figure 12 est une vue en coupe axiale d'un rouleau à deux pneumatiques semi-creux selon une deuxième forme de réalisation de l'invention.

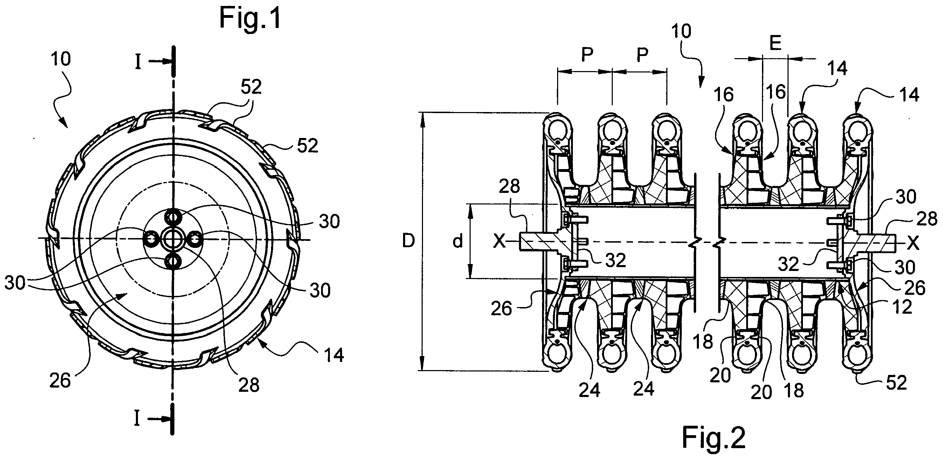

La figure 1 montre un rouleau 10 comprenant un support tubulaire 12, constitué ici d'un cylindre en acier de diamètre d, et propre à tourner autour d'un axe de rotation XX. Ce support tubulaire 12 reçoit une pluralité de pneumatiques 14 de type semi-creux. Ce rouleau comprend un nombre élevé de pneumatiques 14, par exemple de dix à vingt, dont six seulement sont représentés sur la figure 1 pour simplifier le dessin.

Chacun des pneumatiques 14, à l'exception des pneumatiques d'extrémité, est maintenu à l'écart du support tubulaire 12 par une paire d'entretoises 16, de forme générale annulaire, dont chacune comporte un moyeu 18 propre à être enfilé autour du support tubulaire 12 et un bord périphérique 20 de forme circulaire.

Les bords périphériques 20 des entretoises 16 d'une même paire sont aménagés pour maintenir une partie annulaire de retenue 22 d'un pneumatique 14, comme on le verra en détail plus loin.

Par ailleurs, un anneau élastique 24 est disposé à chaque fois autour du support tubulaire 12 entre les moyeux 18 de deux entretoises 16 appartenant à deux paires adjacentes.

Le rouleau comprend des pneumatiques d'extrémité, qui sont identiques aux autres, et dont chacun est maintenu entre une entretoise 16 analogue à celle qui supporte les pneumatiques intermédiaires et un flasque d'extrémité 26 fixé à une extrémité du support tubulaire 12.

Ceci permet de maintenir un empilement alterné de paires d'entretoises 16 et d'anneaux élastiques 24 de façon serrée, dans la direction axiale, entre les deux flasques d'extrémité 26. Comme il existe un jeu nécessaire (typiquement de l'ordre de quelques millimètres) entre le support tubulaire et chacune des entretoises, on peut ainsi réaliser une compression axiale sur le support tubulaire pour donner une souplesse axiale à l'assemblage et éviter au jeu défini précédemment de détériorer l'ensemble.

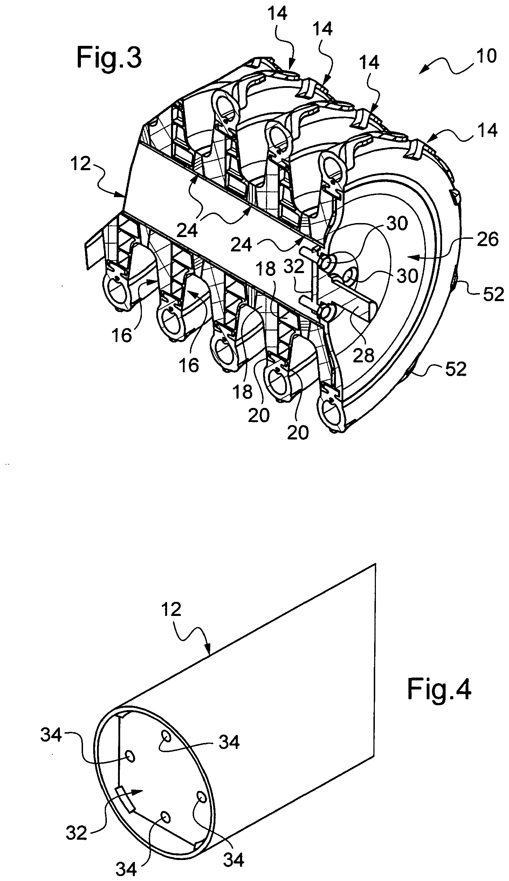

Comme on peut le voir sur les figures 1 à 3, chacun des flasques d'extrémité 26 porte un bout d'arbre 28 s'étendant dans la direction de l'axe de rotation XX. Chacun des flasques d'extrémité 26 est vissé, dans l'exemple au moyen de quatre vis 30 (figures 1 à 3), sur une plaque de butée 32 (figures 3 et 4) fixée à l'intérieur du support tubulaire 12. Dans l'exemple, la plaque de butée 32 est soudée directement à l'intérieur du support tubulaire 12 et elle comporte quatre trous filetés 34 pour recevoir respectivement les quatre vis 30.

Ainsi, lorsque les flasques d'extrémité 26 sont vissés aux extrémités respectives du support tubulaire 12, ils assurent une compression axiale de l'ensemble et cela de manière élastique grâce à la présence des anneaux élastiques 24.

Les pneumatiques 14 de type semi-creux sont réalisés de manière classique, comme enseigné par exemple par la publication FR-A-2 763 279 déjà citée. Ces pneumatiques ont un diamètre extérieur D (figure 1) nettement supérieur au diamètre d du support tubulaire 12 grâce à la présence des entretoises.

A titre d'exemple, le rapport D/d peut être de l'ordre de 2 à 5. Dans l'exemple de réalisation, ce rapport est sensiblement égal à 3,5.

De ce fait, on peut utiliser un support tubulaire 12 d'un poids réduit par rapport à un support tubulaire tel qu'enseigné par la publication précitée.

On se réfère maintenant plus particulièrement à la figure 4 pour décrire la structure d'un pneumatique 14 de type semi-creux. Ce pneumatique semi-creux, encore appelé bandage semi-creux, est réalisé de manière conventionnelle. Il comprend une enveloppe tubulaire 36, non gonflée, ayant une bande de roulement 38, une paroi interne 40 formant manchon et située à l'opposée de la bande de roulement, ainsi que deux flancs 42 reliant la bande de roulement à la paroi interne.

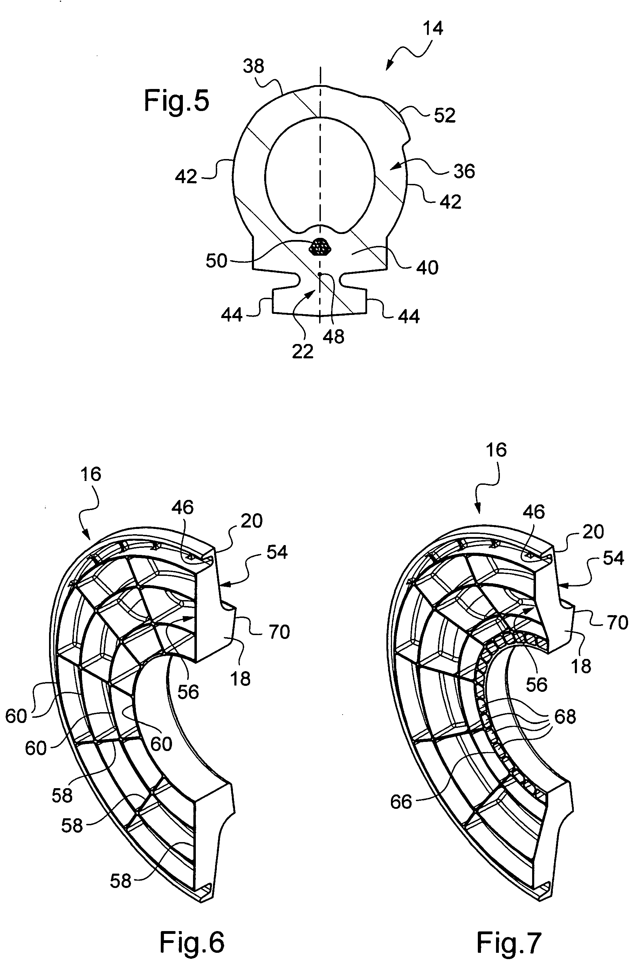

La partie annulaire de retenue 22 du pneumatique comprend deux talons opposés 44 et le bord périphérique 20 de chaque entretoise comporte une gorge annulaire 46 (figure 6). Il en résulte que les deux talons 44 d'un pneumatique peuvent être maintenus dans les gorges annulaires respectives 46, situées en vis-à-vis, de deux entretoises d'une même paire, comme on le voit sur les figures 1 et 3.

Comme on peut le voir sur la figure 5, les deux talons opposés 44 se rattachent à la paroi interne 40 par un anneau 48. L'ensemble formé par les deux talons 44 et cet anneau 48 présente, en section transversale, une forme de T inversé, ou forme en champignon.

Le pneumatique semi-creux est avantageusement renforcé. Dans l'exemple, il comprend au moins une armature interne 50 logée, c'est-à-dire noyée, dans la paroi interne 40 de l'enveloppe tubulaire 36. Cette armature interne permet de renforcer le pneumatique dans une région de l'enveloppe qui est particulièrement sollicitée.

La bande de roulement 38 du pneumatique peut être lisse ou bien comporter des reliefs positifs ou négatifs, tels que des crampons 52 comme on peut le voir sur les figures 1,2, 3 et 5.

On se réfère maintenant plus particulièrement à la figure 6 pour décrire la structure d'une entretoise 16. L'entretoise 16 est délimitée d'un côté par une paroi externe 54 qui s'étend entre le moyeu 18 et le bord périphérique 20 dans lequel est aménagée la gorge annulaire 46. La paroi externe 54 présente une forme de révolution et va en s'évasant à partir du moyeu 18 jusqu'au bord périphérique 20.

Du côté opposé, l'entretoise est délimitée par une face interne 56 généralement plane qui s'étend perpendiculairement à l'axe de rotation XX du rouleau. Lorsque deux entretoises 16 d'une même paire sont disposées en vis-à-vis pour enserrer un pneumatique 16, leurs faces internes 56 viennent en contact mutuel.

Les entretoises 16 sont réalisées monobloc par moulage de matière. On utilise selon un mode de réalisation non couvert par l'invention une matière plastique renforcée. Un exemple est un polyamide chargé tel que la matière PA 6.6 chargée de fibres ou de billes de verre. Ceci permet de contribuer à l'allégement du rouleau.

Par ailleurs, dans l'exemple représenté, l'entretoise 16 comprend des nervures de renforcement, à savoir des nervures radiales 58 et des nervures circulaires 60.

Ces nervures de renforcement s'étendent à l'intérieur de l'entretoise, c'est-à-dire entre la paroi externe 54 et la face interne 56, cette dernière constituant ainsi une face ouverte.

La présence de ces nervures contribue à renforcer l'entretoise, tout en diminuant son poids.

Toutefois, il est possible de réaliser aussi, en variante, des entretoises pleines ou partiellement évidées.

La partie annulaire de retenue 22 de chacun des pneumatiques d'extrémité est maintenue entre le bord périphérique 20 d'une entretoise 16 et un bord périphérique homologue 62 d'un flasque d'extrémité 26. Ce dernier délimite une gorge annulaire 64 pour accueillir l'un des talons 44 du pneumatique d'extrémité (figure 3).

La figure 7 montre une entretoise 16 analogue à celle décrite précédemment mais destinée à maintenir un pneumatique d'extrémité en coopération avec un flasque d'extrémité 26. Comme cette entretoise est particulièrement sollicitée, il est avantageux de la munir de renforts dans la région du moyeu.

Dans l'exemple de la figure 7, l'entretoise est analogue à celle de la figure 6 mais comprend une nervure circulaire supplémentaire 66 et des nervures radiales 68 rattachées à cette nervure circulaire 66 et à la nervure circulaire 60 qui vient en contact avec le support tubulaire. Ces nervures 66 et 68 permettent de renforcer la structure de l'entretoise dans la région du moyeu 18.

Comme on peut le voir sur les figures 6 et 7, chaque entretoise comprend, dans la région du moyeu 18, une paroi tronconique 70 qui va en s'évasant dans la direction d'éloignement de l'axe de rotation XX.

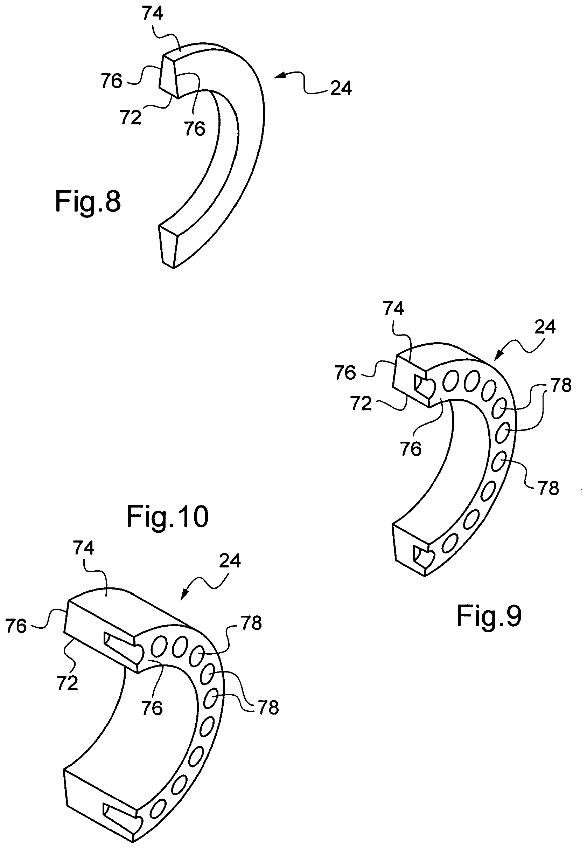

On se réfère maintenant à la figure 8 pour décrire plus particulièrement la structure d'un anneau élastique 24. Celui-ci est délimité par une paroi interne 72 cylindrique, une paroi externe 74 cylindrique et deux parois tronconiques 76. L'anneau présente ainsi une section transversale trapézoïdale dont la grande base correspond à la paroi interne 72 et la petite base à la paroi externe 74.

L'anneau élastique 24 représenté sur la figure 8 est plein et il comprend une dimension axiale de valeur choisie pour ajuster le pas P et l'espacement E (figure 1) entre deux pneumatiques adjacents. Pour assurer une bonne compression de l'ensemble, la paroi tronconique 70 du moyeu 18 a une forme homologue de celle de la paroi tronconique 76 d'un anneau élastique 24.

La figure 9 montre un autre anneau élastique 24 qui présente une dimension axiale supérieure à celle de l'anneau élastique de la figure 8. Ceci permet d'accroître l'espacement E entre deux pneumatiques et donc le pas P qui sépare ces derniers.

Dans ce cas, il est prévu des évidements 78 qui débouchent dans l'une des parois tronconiques 76, ce qui permet d'alléger l'anneau élastique tout en conservant ses propriétés élastiques.

La figure 10 montre un autre exemple d'anneau 24 qui présente une dimension axiale supérieure à celle de l'anneau élastique de la figure 9, ce qui permet d'augmenter encore l'écart entre deux pneumatiques adjacents. Comme dans la figure 9, des évidements 78 sont prévus dans l'anneau élastique 24.

L'anneau élastique est réalisé en une matière élastique de type caoutchouc naturel ou synthétique. On utilise avantageusement un caoutchouc d'une dureté de l'ordre de 45 à 80 Shore, par exemple de 63 Shore.

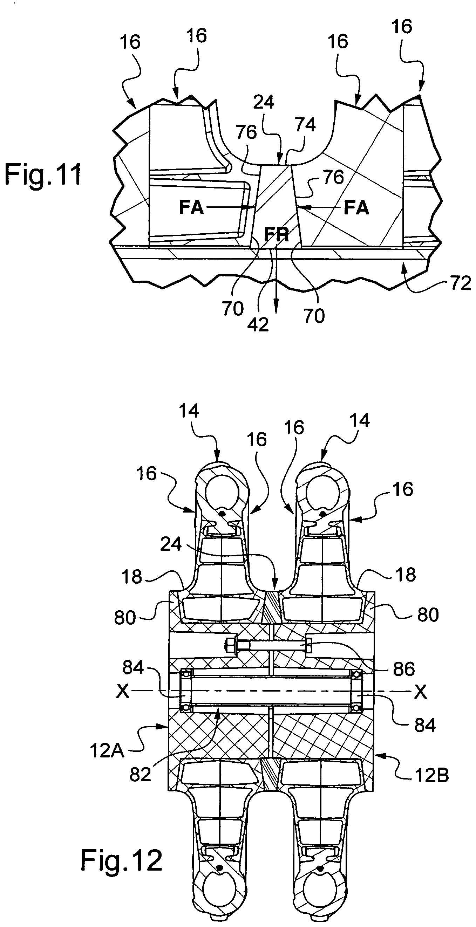

Lorsqu'un anneau 24 (figure 11) est maintenu entre les moyeux respectifs de deux entretoises 16 appartenant à des paires d'entretoises adjacentes, ses parois tronconiques 72 viennent en butée respectivement avec les parois tronconiques 70 des entretoises précitées.

Il en résulte que, sous l'effet de la compression axiale, il se produit deux forces axiales opposées FA qui ont une composante radiale (force radiale FR) dirigée vers l'intérieur, c'est-à-dire en direction de l'axe de rotation, qui sollicite à chaque fois l'anneau élastique 24 en direction du support tubulaire 12. Ainsi l'anneau élastique est écrasé radialement contre le support tubulaire, ce qui annule le jeu au niveau de ce dernier.

La figure 12 montre un rouleau selon une autre forme de réalisation, qui comprend deux pneumatiques 14, deux paires d'entretoises 16 pour maintenir respectivement les deux pneumatiques 14 et un anneau élastique 24 disposé entre les paires d'entretoises 16.

Le support tubulaire 12 est dans de cas formé de deux parties 12A et 12B munies chacune d'un rebord périphérique 80 apte à prendre appui contre le moyeu 18 d'une entretoise 16. Les deux parties 12A et 12B sont ici identiques et sont montées autour d'un moyeu central 82 par l'intermédiaire de roulements 84.

En outre les deux parties 12A et 12B sont solidarisées entre elles par des moyens de fixation 86 formés, dans l'exemple par des gougeons de type vis-écrou qui s'étendent dirigés parallèlement à l'axe de rotation XX et qui traversent les deux parties 12A et 12B. Ces moyens de fixation permettent de régler l'effort de serrage axial et ils procurent en outre un caractère démontable à l'ensemble du rouleau, notamment pour remplacer un pneumatique ou l'anneau élastique en cas de besoin.

Les parties 12A et 12B sont de préférence réalisées en métal, ou encore en matière plastique, par exemple du type polyamide.

Un tel rouleau à deux pneumatiques peut être porté par une fourche ou analogue à l'arrière d'un machine agricole. De préférence la machine sera alors équipée de plusieurs rouleaux indépendants, pour mieux suivre les irrégularités du terrain.

On comprendra que le rouleau de l'invention peut être réalisé avec différentes dimensions et un nombre variable de pneumatiques semi-creux.

L'invention trouve une application particulière aux rouleaux destinés aux machines agricoles ou analogues.

## Revendications

1. Rouleau comprenant un support tubulaire (12) propre à tourner autour d'un axe (XX), une pluralité de pneumatiques (14) de type semi-creux montés autour du support tubulaire, et des paires d'entretoises (16) conçues pour maintenir les pneumatiques (14) à l'écart du support tubulaire (12), chaque entretoise (16) a un moyeu (18) propre à être enfilé autour du support tubulaire (12) et un bord périphérique (20), les bords périphériques (20) des entretoises (16) d'une même paire étant aménagés pour maintenir une partie annulaire de retenue (22) du pneumatique, un anneau élastique (24) étant à chaque fois disposé autour du support tubulaire (12) entre les moyeux (18) de deux entretoises (16) appartenant à deux paires adjacentes, **caractérisé en ce que** l'anneau élastique (24) est réalisé en une matière élastique.

2. Rouleau selon la revendication 1, **caractérisé en ce que** la partie annulaire de retenue (22) du pneumatique (14) comprend deux talons opposés (44) et **en ce que** le bord périphérique (20) de chaque entretoise (16) comporte une gorge annulaire (46), en sorte que les deux talons (44) d'un pneumatique (14) peuvent être maintenus dans les gorges annulaires (46) respectives, situées en vis-à-vis, des deux entretoises (16) d'une même paire.

3. Rouleau selon la revendication 2, **caractérisé en ce que** le pneumatique (14) comprend une enveloppe tubulaire (36) non gonflée ayant une bande de roulement (38), une paroi interne (40) située à l'opposé de la bande de roulement, et deux flancs (42) reliant la bande de roulement (38) à la paroi interne (40), et **en ce que** les deux talons opposés (44) se rattachent à la paroi interne (40) par un anneau (48).

4. Rouleau selon la revendication 3, **caractérisé en ce que** le pneumatique (14) comprend au moins une armature interne (50) logée dans la paroi interne (40) de l'enveloppe tubulaire (36).

5. Rouleau selon l'une des revendications 1 à 4, **caractérisé en ce que** l'entretoise (16) est délimitée d'un côté par une paroi externe (54) qui s'étend entre le moyeu (18) et le bord périphérique (20) et du côté opposé par une face interne (56) généralement plane, qui s'étend perpendiculairement à l'axe de rotation (XX) du rouleau.

6. Rouleau selon la revendication 5, **caractérisé en ce que** l'entretoise (16) comprend des nervures de renforcement (58, 60) s'étendant à l'intérieur entre la paroi externe (54) et la face interne (56) qui est une face ouverte.

7. Rouleau selon l'une des revendications 1 à 6, **caractérisé en ce que** l'entretoise (16) est réalisée monobloc par moulage d'une matière plastique, en particulier un polyamide chargé.

8. Rouleau selon l'une des revendications 1 à 7, **caractérisé en ce qu'**il comprend deux pneumatiques d'extrémité (14) dont chacun est maintenu entre une entretoise (16) et un flasque d'extrémité (26) fixé à une extrémité du support tubulaire (12), ce qui permet de maintenir un empilement alterné de paires d'entretoises (16) et d'anneaux élastiques (24) de façon serrée entre deux flasques d'extrémité (26).

9. Rouleau selon la revendication 8, **caractérisé en ce que** chacun des flasques d'extrémité (26) porte un bout d'arbre (28) s'étendant dans la direction de l'axe de rotation (XX) et est vissé sur des butées (32) fixées à l'intérieur du support tubulaire (12).

10. Rouleau selon l'une des revendications 8 et 9, **caractérisé en ce que** la partie annulaire de retenue (22) de chacun des pneumatiques d'extrémité (14) est maintenu entre le bord périphérique (20) d'une entretoise (16) et un bord périphérique (62) d'un flasque d'extrémité (26).

11. Rouleau selon la revendication 10, **caractérisé en ce que** l'entretoise (16) maintenant un pneumatique d'extrémité (14) comprend des renforts (66, 68) dans la région du moyeu (18).

12. Rouleau selon l'une des revendications 1 à 7, **caractérisé en ce qu'**il comprend deux pneumatiques (14), deux paires d'entretoises (16) pour maintenir respectivement les deux pneumatiques (14) et un anneau élastique (24) disposé entre les paires d'entretoises (16), et **en ce que** le support tubulaire (12) est formé de deux parties (12A , 12B) munies chacune d'un rebord périphérique (80) apte à prendre appui contre le moyeu (18) d'une entretoise (16), les deux parties (12A, 12B) étant solidarisées entre elles par des moyens de fixation (86).

13. Rouleau selon l'une des revendications 1 à 12, **caractérisé en ce que** l'anneau élastique (24) est délimité par une paroi interne (72) cylindrique, une paroi externe (74) cylindrique, et deux parois tronconiques (76), de manière à présenter une section transversale trapézoïdale dont la grande base correspond à la paroi interne et la petite base à la paroi externe, et **en ce que** le moyeu (28) de chaque entretoise est délimité par une paroi tronconique (70) de forme homologue de la paroi tronconique (72) d'un anneau élastique (24).

14. Rouleau selon l'une des revendications 1 à 13, **caractérisé en ce que** l'anneau élastique (24) comprend une dimension axiale de valeur choisie pour régler l'espacement (E) et le pas (P) entre deux pneumatiques (14) adjacents.

15. Rouleau selon l'une des revendications 1 à 14, **caractérisé en ce que** l'anneau élastique (24) est réalisé en une matière élastique de type caoutchouc naturel ou synthétique.

## Patentansprüche

1. Walze, umfassend einen röhrenartigen Träger (12), der geeignet ist, sich um eine Achse (XX) zu drehen, eine Vielzahl von Halbhohlreifen (14), die um den röhrenartigen Träger montiert sind, und Paare von Abstandshaltern (16), die dazu vorgesehen sind, die Reifen (14) in einem Abstand zum röhrenartigen Träger (12) zu halten,
wobei jeder Abstandshalter (16) eine Nabe (18), die geeignet ist, um den röhrenartigen Träger (12) geschoben zu werden, und einen Umfangsrand (20) aufweist, wobei die Umfangsränder (20) der Abstandshalter (16) eines selben Paars dazu vorgesehen sind, einen ringartigen Halteteil (22) des Reifens zu halten, wobei jeweils ein elastischer Ring (24) um den röhrenartigen Träger (12) zwischen den Naben (18) der beiden Abstandshalter (16), die zwei aneinandergrenzenden Paaren angehören, angeordnet ist, **dadurch gekennzeichnet, dass** der elastische Ring (24) aus einem elastischen Material hergestellt ist.

2. Walze nach Anspruch 1, **dadurch gekennzeichnet, dass** der ringartige Halteteil (22) des Reifens (14) zwei entgegengesetzte Fersen (44) umfasst, und dass der Umfangsrand (20) jedes Abstandshalters (16) eine Ringnut (46) umfasst, so dass die beiden Fersen (44) eines Reifens (14) in den jeweiligen Ringnuten (46) der beiden Abstandshalter (16) eines selben Paars, die einander gegenüberliegend angeordnet sind, gehalten werden können.

3. Walze nach Anspruch 2, **dadurch gekennzeichnet, dass** der Reifen (14) eine nicht aufgeblasene röhrenartige Hülle (36) mit einer Lauffläche (38), eine Innenwand (40), die sich gegenüber der Lauffläche befindet, und zwei Seitenflächen (42) umfasst, die die Lauffläche (38) mit der Innenwand (40) verbinden, und dass die beiden entgegengesetzt liegenden Fersen (44) an der Innenwand (40) durch einen Ring (48) verbunden sind.

4. Walze nach Anspruch 3, **dadurch gekennzeichnet, dass** der Reifen (14) mindestens eine Innenbewehrung (50) umfasst, die in der Innenwand (40) der röhrenartigen Hülle (36) angeordnet ist.

5. Walze nach einem der Ansprüche 1 bis 4, **dadurch gekennzeichnet, dass** der Abstandshalter (16) auf einer Seite durch eine Außenwand (54), die sich zwischen der Nabe (18) und dem Umfangsrand (20) erstreckt, und auf der entgegengesetzt liegenden Seite durch eine im Allgemeinen ebene Innenfläche (56) begrenzt ist, die sich senkrecht auf die Drehachse (XX) der Walze erstreckt.

6. Walze nach Anspruch 5, **dadurch gekennzeichnet, dass** der Abstandshalter (16) Verstärkungsrippen (58, 60) umfasst, die sich innen zwischen der Außenwand (54) und der Innenfläche (56), die eine offene Fläche ist, erstrecken.

7. Walze nach einem der Ansprüche 1 bis 6, **dadurch gekennzeichnet, dass** der Abstandshalter (16) einstückig durch Kunststoffguss, insbesondere durch Guss von verstärktem Polyamid, hergestellt ist.

8. Walze nach einem der Ansprüche 1 bis 7, **dadurch gekennzeichnet, dass** sie zwei Endreifen (14) umfasst, von denen jeder zwischen einem Abstandshalter (16) und einem Endflansch (26), der an einem Ende des röhrenartigen Trägers (12) befestigt ist, gehalten ist, wodurch es möglich ist, einen Stapel von abwechselnd Abstandshalterpaaren (16) und elastischen Ringen (24) fest zwischen zwei Endflanschen (26) zu halten.

9. Walze nach Anspruch 8, **dadurch gekennzeichnet, dass** jeder der Endflansche (26) einen Wellenansatz (28) trägt, der sich in die Richtung der Drehachse (XX) erstreckt und auf Anschläge (32) geschraubt ist, die in dem röhrenartigen Träger (12) befestigt sind.

10. Walze nach einem der Ansprüche 8 und 9, **dadurch gekennzeichnet, dass** der ringartige Halteteil (22) jedes der Endreifen (14) zwischen dem Umfangsrand (20) einem Abstandshalter (16) und einem Umfangsrand (62) eines Endflansches (26) gehalten wird.

11. Walze nach Anspruch 10, **dadurch gekennzeichnet, dass** der Abstandshalter (16), die einen Endreifen (14) hält, Verstärkungen (66, 68) in der Region der Nabe (18) umfasst.

12. Walze nach einem der Ansprüche 1 bis 7, **dadurch gekennzeichnet, dass** sie zwei Reifen (14), zwei Paare von Abstandshaltern (16), um die beiden Reifen (14) jeweils zu halten, und einen elastischen Ring (24), der zwischen den Abstandshalterpaaren (16) angeordnet ist, umfasst, und dass der röhrenartige Träger (12) von zwei Teilen (12A, 12B) gebildet ist, die jeweils mit einem Umfangsrand (80) versehen sind, der geeignet ist, an der Nabe (18) eines Abstandshalters (16) zur Anlage zu gelangen, wobei die beiden Teile (12A, 12B) miteinander durch Befestigungsmittel (86) verbunden sind.

13. Walze nach einem der Ansprüche 1 bis 12, **dadurch gekennzeichnet, dass** der elastische Ring (24) durch eine zylindrische Innenwand (72), eine zylindrische Außenwand (74) und zwei kegelstumpfartige Wände (76) begrenzt ist, um einen trapezartigen Querschnitt aufzuweisen, dessen große Basis der Innenwand und dessen kleine Basis der Außenwand entspricht, und dass die Nabe (28) jeden Abstandshalters durch eine kegelstumpfartige Wand (70) von homologer Form zu der kegelstumpfartigen Wand (72) eines elastischen Ringes (24) begrenzt ist.

14. Walze nach einem der Ansprüche 1 bis 13, **dadurch gekennzeichnet, dass** der elastische Ring (24) eine axiale Dimension mit einem Wert aufweist, der gewählt ist, um den Abstand (E) und die Steigung (P) zwischen zwei aneinandergrenzenden Reifen (14) zu regeln.

15. Walze nach einem der Ansprüche 1 bis 14, **dadurch gekennzeichnet, dass** der elastische Ring (24) aus einem elastischen Material vom Typ natürlicher oder synthetischer Kautschuk hergestellt ist.

## Claims

1. Roller comprising a tubular support (12) able to rotate about an axis (XX), a plurality of tyres (14) of the semi-hollow type mounted around the tubular support, and pairs of spacers (16) designed to hold the tyres (14) away from the tubular support (12), each spacer (16) having a hub (18) able to be slipped around the tubular support (12) and a peripheral edge (20), the peripheral edges (20) of the spacers (16) of one and the same pair being configured to hold a retaining annular part (22) of the tyre, an elastic ring (24) being in each instance arranged around the tubular support (12) between the hubs (18) of two spacers (16) belonging to two adjacent pairs, **characterized in that** the elastic ring (24) is made of an elastic material.

2. Roller according to Claim 1, **characterized in that** the retaining annular part (22) of the tyre (14) comprises two opposite beads (44) and **in that** the peripheral edge (20) of each spacer (16) comprises an annular groove (46), so that the two beads (44) of a tyre (14) can be held in the respective annular grooves (46), situated facing one another, of the two spacers (16) of one and the same pair.

3. Roller according to Claim 2, **characterized in that** the tyre (14) comprises a non-inflated tubular casing (36) having a tread (38), an internal wall (40) situated on the opposite side to the tread, and two sidewalls (42) connecting the tread (38) to the internal wall (40), and **in that** the two opposite beads (44) are arranged to the internal wall (40) by a ring (48).

4. Roller according to Claim 3, **characterized in that** the tyre (14) comprises at least one internal reinforcement (50) housed in the internal wall (40) of the tubular casing (36).

5. Roller according to one of Claims 1 to 4, **characterized in that** the spacer (16) is delimited on one side by an external wall (54) which extends between the hub (18) and the peripheral edge (20) and on the opposite side by an internal face (56), generally planar, which extends perpendicular to the axis of rotation (XX) of the roller.

6. Roller according to Claim 5, **characterized in that** the spacer (16) comprises reinforcing ribs (58, 60) extending on the inside between the external wall (54) and the internal face (56) which is an open face.

7. Roller according to one of Claims 1 to 6, **characterized in that** the spacer (16) is produced in a single piece by moulding of a plastic, particularly a filled polyamide.

8. Roller according to one of Claims 1 to 7, **characterized in that** it comprises two end tyres (14) each of which is held between a spacer (16) and an end-plate (26) fixed to one end of the tubular support (12), this making it possible to maintain an alternating stack of pairs of spacers (16) and of elastic rings (24) held tightly between two end-plates (26).

9. Roller according to Claim 8, **characterized in that** each of the end-plates (26) bears a stub of shaft (28) extending in the direction of the axis of rotation (XX) and is screwed to end-stops (32) fixed inside the tubular support (12).

10. Roller according to one of Claims 8 and 9, **characterized in that** the retaining annular part (22) of each of the end tyres (14) is held between the peripheral edge (20) of a spacer (16) and a peripheral edge (62) of an end-plate (26).

11. Roller according to Claim 10, **characterized in that** the spacer (16) holding an end tyre (14) comprises reinforcers (66, 68) in the region of the hub (18).

12. Roller according to one of Claims 1 to 7, **characterized in that** it comprises two tyres (14), two pairs of spacers (16) to respectively hold the two tyres (14) and an elastic ring (24) arranged between the pairs of spacers (16), and **in that** the tubular support (12) is formed of two parts (12A, 12B) each equipped with a peripheral flange (80) able to bear against the hub (18) of a spacer (16), the two parts (12A, 12B) being joined together by fixing means (86).

13. Roller according to one of Claims 1 to 12, **characterized in that** the elastic ring (24) is delimited by a cylindrical internal wall (72), a cylindrical external wall (74), and two frustoconical walls (76) so that it has a trapezoidal cross section, the large base of which corresponds to the internal wall and the small base to the external wall, and **in that** the hub (28) of each spacer is delimited by a frustoconical wall (70) analogous in shape to the frustoconical wall (72) of an elastic ring (24).

14. Roller according to one of Claims 1 to 13, **characterized in that** the elastic ring (24) comprises an axial dimension of a magnitude chosen to regulate the spacing (E) and the pitch (P) between two adjacent tyres (14).

15. Roller according to one of Claims 1 to 14, **characterized in that** the elastic ring (24) is made of an elastic material of the natural or synthetic rubber type.
